# FASCICULE DE BREVET EUROPEEN

(11) **EP 0 779 038 B1**
(45) Date de publication et mention de la délivrance du brevet: **06.02.2002**
(21) Numéro de dépôt: 95203172.2
(22) Date de dépôt: 20.11.1995
(51) Int. Cl.: A23L 1/10, A23L 1/105, A23L 1/212, A21D 2/26, A23L 1/08

(54) **Céréales hydrolysées aux fruits ou au miel**
Früchte oder Honig enthaltendes hydrolysiertes Getreide
Hydrolysed cereal containing fruit or honey

(43) Date de publication de la demande: 18.06.1997
(73) Titulaire: SOCIETE DES PRODUITS NESTLE S.A., 1800 Vevey (CH)
(72) Inventeur: Badertscher, Ernest, CH-1350 Orbe (CH)
(74) Mandataire: Wavre, Claude-Alain

(56) Documents cités:
- EP-A- 0 258 486
- EP-A- 0 619 083
- GB-A- 1 359 942

## Description

La présente invention a pour objet un procédé de préparation de céréales hydrolysées aux fruits ou au miel et un appareil pour la mise en oeuvre du procédé.

On connaît depuis longtemps la fabrication de céréales hydrolysées.

EP 258486 décrit notamment un procédé de préparation de céréales hydrolysées aux fruits, dans lequel on prépare tout d'abord 20 à 25% de céréales hydrolysées enzymatiquement puis on les mélange à de la farine d'avoine, à de l'eau et à au moins 50% de fruits. Puis on chauffe le mélange, on le dégaze et on lui fait subir une étape de post-chauffage, avant de le conditionner dans des récipients en verre que l'on pasteurise.

GB-A-1359942 décrit un mélange de panure de pain de maïs levé avec de la levure, de légumes et/ou de fruits déshydratés.

La teneur en matière sèche des fruits est très basse. Elle est en général de l'ordre de 10 à 15%. Cela pose des problèmes pour la préparation de céréales hydrolysées aux fruits car cela augmente les temps et les coûts de séchage et de plus cela nuit à la qualité du produit.

Le miel contient souvent beaucoup de spores. Cela pose des problèmes lors de la préparation de céréales hydrolysées au miel, car si l'on ajoute le miel juste avant l'étape de stérilisation, on n'empêche pas l'augmentation de la charge bactérienne par germination des spores lors de l'étape de stérilisation.

La présente invention a pour but de proposer un procédé de préparation de céréales hydrolysées aux fruits ou au miel ainsi qu'un appareil pour la mise en oeuvre du procédé dans de conditions particulièrement simples permettant d'éviter ces problèmes.

A cet effet, dans le procédé de préparation de céréales hydrolysées aux fruits ou au miel selon la présente invention:
- on prépare un mélange comprenant une farine de céréale, des fruits entiers et/ou en morceaux et une alpha-amylase, ou un mélange comprenant une farine de céréale, du miel, de l'eau et une alpha-amylase,
- on traite ledit mélange par injection de vapeur en plusieurs étapes successives dans plusieurs zones de traitement successives, la vapeur étant injectée sous forme d'un jet annulaire enveloppant le mélange, à contre-courant ou dans le sens du courant du mélange dans une premiére zone et à contre-courant dans les zones suivantes, et la quantité de vapeur étant décroissante d'étape en étape,
- puis l'on sèche ledit mélange.

L'appareil pour la mise en oeuvre du procédé selon la présente invention comprend, montés en série, au moins 2 dispositifs d'injection (1) de vapeur comprenant chacun une tuyère d'injection de produit (11) et une tuyère d'éjection de produit (12) présentant chacune une section intérieure d'abord convergente puis divergente placées à la suite l'une de l'autre dans le tube droit (10) d'un corps en forme de T, caractérisé par le fait qu'une extrémité aval (17) de ladite tuyère d'injection présente une surface intérieure conique s'évasant vers l'aval, une extrémité amont (18) de ladite tuyère d'éjection présente une surface extérieure conique convergeant vers l'amont, ladite extrémité amont de la tuyère d'éjection pénètre dans l'extrémité aval de la tuyère d'injection, et les deux extrémités délimitent entre elles un passage conique d'injection de vapeur (19) convergeant et débouchant par un orifice de sortie annulaire dans la tuyère d'injection de produit et présentant un orifice d'entrée annulaire adjacent à un bras tubulaire (13) dudit corps en forme de T.

On a constaté avec surprise qu'un tel procédé et un tel appareil permettent effectivement d'augmenter la teneur en matière sèche du mélange en hydrolysant directement la farine de céréale mélangée avec les fruits tout en évitant d'abîmer les fruits entiers ou en morceaux par traitement du mélange par injection en plusieurs étapes de vapeur à contre-courant.

De plus, on a constaté avec surprise qu'un tel procédé et un tel appareil permettent effectivement d'obtenir des céréales hydrolysées au miel dépourvues de charge bactérienne en hydrolysant directement la farine de céréale mélangée avec le miel et en stérilisant le mélange par injection, en plusieurs étapes, de vapeur à contre-courant. En effet, lors de l'hydrolyse du mélange, les spores contenues dans le miel germent et, lors de la stérilisation, toute cette charge bactérienne est éliminée.

Pour mettre en oeuvre le procédé selon la présente invention, on prépare de préférence un mélange présentant une teneur en eau de 40-80%.

Dans un premier mode de réalisation préféré du présent procédé, on peut préparer un mélange comprenant, en % en poids de matière sèche, 15-45% de fruits et 85-55% de farine de céréale, par exemple.

Dans un second mode de réalisation préféré du présent procédé, on peut préparer un mélange comprenant 15-25% de miel, 40-50% d'eau et 30-40% de farine de céréale, par exemple.

De préférence, on prépare un mélange comprenant 0,05 à 0,2 g d'alpha-amylase par 100 g de matière sèche de farine de céréale.On peut utiliser notamment comme alpha-amylase celle commercialisée sous la dénomination de Dexlo P par Gist-Brocades N.V., Food Ingredient division, P.B. 01, NL-260 MA DELFT.

On traite donc ledit mélange par injection de vapeur en plusieurs étapes successives dans plusieurs zones de traitement successives, la vapeur étant injéctée sous forme d'un jet annulaire enveloppant le mélange, à contre-courant ou dans le sens du courant du mélange dans une première zone et à contre-courant dans les zones suivantes.
Si la vapeur peut être injectée dans une première zone de traitement dans le sens du courant du mélange, alors que dans les zones suivantes elle peut être injectée à contre-courant du mélange, c'est pour éviter, le cas échéant, d'abîmer les fruits entiers et/ou en morceaux relativement fragiles, par exemple.
De préférence, on traite le mélange avec une quantité de vapeur décroissante d'étape en étape, à partir d'une température de 80-100° C favorable à l'hydrolyse jusqu'à une température de 120-150° C nécessaire à la stérilisation et à l'inactivation des enzymes.
A chaque étape, le dispositif d'injection de vapeur est relié à la conduite principale d'arrivée de vapeur par un bras tubulaire. L'ouverture des buses d'injection de vapeur décroit d'étape en étape, de manière à diminuer progressivement la quantité de vapeur injectée entre la première et la dernière étape.

Dans le premier mode de réalisation préféré du présent procédé, le mélange traverse de préférence les zones de traitement successives sous forme d'un courant cylindrique de diamètre supérieur à la' dimension des fruits entiers et/ou en morceaux, de manière à ne pas abîmer les fruits entiers et /ou en morceaux.

Enfin, on peut sécher le mélange notamment par lyophilisation pour un mélange comprenant une farine de céréale et des fruits entiers et/ou en morceaux ou par pulvérisation pour un mélange comprenant une farine de céréale, du miel et de l'eau, par exemple.

Dans le premier mode de réalisation préféré du présent procédé, on peut choisir les fruits dans un groupe comprenant les framboises, les fraises, les mûres et les cerises, par exemple.

De préférence, dans ce mode de réalisation préféré du présent procédé, on ajuste le pH des fruits à une valeur comprise entre plus de 5 et 6,5 en réalisant le mélange en présence d'un sel alcalin, de manière à pouvoir hydrolyser directement la farine de céréale avec les fruits par l'alpha-amylase à pH optimal. On peut utiliser comme sel alcalin le phosphate trisodique, par exemple.

De préférence, on acidifie alors à pH 3-5 le mélange comprenant une farine de céréale et des fruits entiers et/ou en morceaux avant le séchage, de manière à retrouver la couleur des fruits qu'ils pouvaient avoir perdu du fait de l'augmentation de leur pH à une valeur comprise entre plus de 5 et 6,5 avec un sel alcalin. On peut acidifier le mélange avec de l'acide citrique mono-hydrate, par exemple.

L'appareil utilisé selon la présente invention est décrit plus en détails ci-après en référence au dessin annexé, dans lequel:
- la figure 1 est une vue schématique d'ensemble d'une forme d'exécution de l'appareil
- la figure 2 est une coupe longitudinale d'un dispositif d'injection de vapeur de l'appareil représenté à la figure 1.

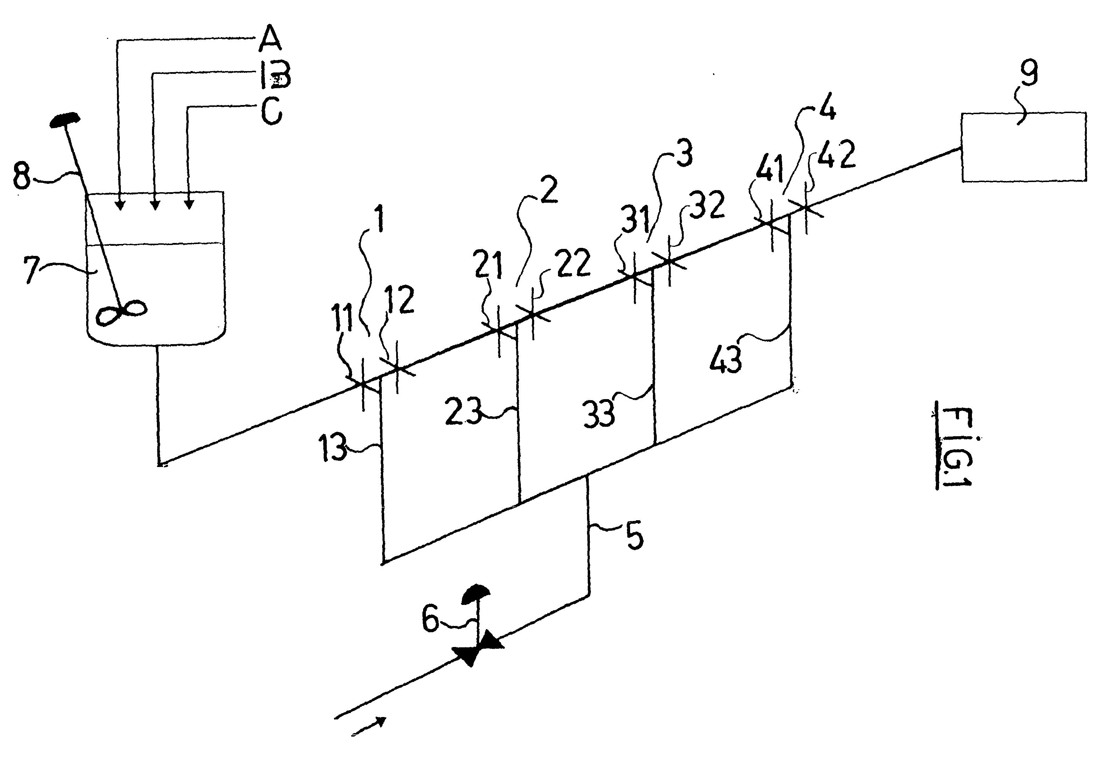

La forme d'exécution de l'appareil représentée à la figure 1 comprend quatre dispositifs d'injection de vapeur (1-4) montés en série.

Chaque dispositif d'injection de vapeur comprend une tuyère d'injection de produit (11-41) et une tuyère d'éjection de produit (12-42).
Chaque dispositif d'injection de vapeur présente un bras tubulaire (13-43) relié à la conduite principale d'arrivée de vapeur (5) munie d'une vanne de régulation (6). Le premier dispositif d'injection de vapeur est relié au réservoir (7) muni d'un mélangeur (8), dans lequel on prépare le mélange comprenant une farine de céréale (A), des fruits entiers ou en morceaux ou du miel et de l'eau (B) et une alpha-amylase (C).
Le dernier dispositif d'injection de vapeur est relié au dispositif de séchage (9).

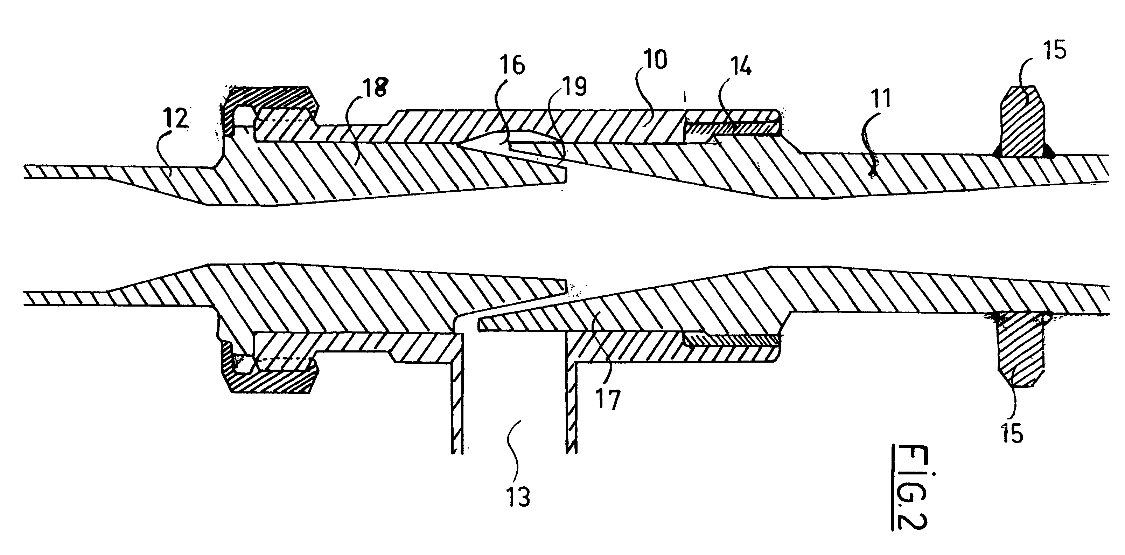

Comme on peut le voir à la figure 2, le dispositif d'injection de vapeur comprend une tuyère d'injection de produit (11) et une tuyère d'éjection de produit (12) à la suite l'une de l'autre dans le tube droit (10) du corps en forme de T, ainsi qu'un bras tubulaire (13) permettant l'arrivée de la vapeur par l'orifice annulaire (16).
Le tube droit (10) est muni d'un écrou de réglage (14) et d'un écrou de serrage (15).
L'extrémité amont (18) de la tuyère d'éjection de produit (12) pénètre dans l'extrémité aval (17) de la tuyère d'injection de produit (11).
Ces deux extémités délimitent entre elles un passage conique d'injection de vapeur (19).

Le procédé selon la présente invention est décrit plus en détails dans les exemples ci-après où les pourcentages et parties sont donnés en poids.

### Exemple 1

A l'aide d'un appareil tel que celui représenté au dessin, on produit des céréales hydrolysées aux framboises.

On prépare dans le réservoir un mélange comprenant 72 kg de farine de blé (87% de matière sèche), 199 kg de framboises fraiches (13% de matière sèche), 0,1 kg d'alpha-amylase Dexlo PTM et 5 kg de phosphate trisodique.

Le mélange présente une teneur en eau de 66% et un pH de 5,7.

On traite le mélange ainsi préparé par injection de vapeur en quatre étapes avec une quantité de vapeur décroissant d'étape en étape. Dans le premier dispositif d'injection de vapeur la température est à 90° C, de manière à permettre l'hydrolyse puis dans les trois autres dispositifs d'injection de vapeur la température augmente progressivement jusqu'à 130° C, de manière à permettre une stérilisation du mélange sans abîmer les framboises en morceaux.

Après la stérilisation, on refroidit le mélange à 65° C et l'on acidifie à pH 4 le mélange en lui ajoutant 5 kg d'acide citrique monohydrate prédilué.

Enfin, on sèche le mélange par lyophilisation.

On obtient ainsi un mélange de céréales hydrolysées aux framboises dont la composition est la suivante:
- protéines: 10,3%
- graisses: 1,4%
- hydrates de carbone: 66,7%
- fibres: 12,3%
- cendres: 6,3%
- teneur en eau: 3%

### Exemple 2

A l'aide d'un appareil tel que celui représenté au dessin, on produit des céréales hydrolysées aux cerises noires.

On prépare dans le réservoir un mélange comprenant 63 kg de farine de blé (87% de matière sèche), 202 kg de cerises noires dénoyautées (19,8% de matière sèche), 0,1 kg d'alpha-amylase Dexlo PTM et 1,4 kg de phosphate trisodique.

Le mélange présente une teneur en eau de 63,7% et un pH de 5,5.

On traite le mélange ainsi préparé par injection de vapeur en quatre étapes avec une quantité de vapeur décroissant d'étape en étape. Dans le premier dispositif d'injection de vapeur la température est à 90° C, de manière à permettre l'hydrolyse puis dans les trois autres dispositifs d'injection de vapeur la température augmente progressivement jusqu'à 130° C, de manière à permettre une stérilisation du mélange sans abîmer les cerises en morceaux.

Après la stérilisation, on refroidit le mélange à 65° C et l'on acidifie à pH 4,2 le mélange en lui ajoutant 1,7 kg d'acide citrique monohydrate prédilué.

Enfin, on sèche le mélange par lyophilisation.

On obtient des céréales hydrolysées aux cerises noires dont la composition est la suivante:
- protéines: 7,9%
- graisses: 0,9%
- hydrates de carbone: 79,8%
- fibres: 5,6%
- cendres: 2,7%
- teneur en eau: 3%

### Exemple 3

A l'aide de l'appareil tel que représenté au dessin, on prépare des céréales hydrolysées au miel.

A cet effet, on prépare dans le réservoir un mélange comprenant 72,8 kg de farine, 43,1 kg de miel du Mexique, 100,4 kg d'eau et 0,1 kg d'alpha-amylase.

Le mélange présente une teneur en eau de 53,7%.

On traite le mélange ainsi préparé par injection de vapeur en deux étapes avec une quantité de vapeur décroissant entre la première et la seconde étape. Dans le premier dispositif d'injection de vapeur la température est à 93° C, de manière à permettre la réaction enzymatique puis dans le second dispositifs d'injection de vapeur la température augmente progressivement jusqu'à 140° C, de manière à permettre une stérilisation du mélange et l'inactivation des enzymes.

Après la stérilisation, on refroidit le mélange à 65° C puis on le sèche par pulvérisation.

On obtient ainsi un mélange de céréales hydrolysées au miel dont la composition est la suivante:
- protéines: 7,9%
- graisses: 0,8%
- hydrates de carbone: 85,8%
- fibres: 3%
- cendres: 0,5%
- teneur en eau: 2%

## Revendications

1. Procédé de préparation de céréales hydrolysées aux fruits ou au miel, dans lequel:
- on prépare un mélange comprenant une farine de céréale, des fruits entiers ou en morceaux et une alpha-amylase, ou un mélange comprenant une farine de céréale, du miel, de l'eau et une alpha-amylase,
- on traite ledit mélange par injection de vapeur en plusieurs étapes successives dans plusieurs zones de traitement successives, la vapeur étant injectée sous forme d'un jet annulaire enveloppant le mélange, à contre-courant ou dans le sens du courant du mélange dans une premiére zone et à contre-courant dans les zones suivantes, et la quantité de vapeur étant décroissante d'étape en étape,
- puis l'on sèche ledit mélange.

2. Procédé selon la revendication 1, dans lequel on prépare un mélange présentant une teneur en eau de 40-80%.

3. Procédé selon la revendication 1, dans lequel on prépare un mélange comprenant 0,05-0,2 g d'alpha-amylase par 100 g de matière sèche de farine de céréale.

4. Procédé selon la revendication 1, dans lequel la quantité de la vapeur injectée va décroissant d'étape en étape, à partir d'une température de 80-100° C jusqu'à une température de 120-150° C.

5. Procédé selon la revendication 1, dans lequel le mélange traverse les zones de traitement successives sous forme d'un courant cylindrique de diamètre supérieur à la dimension desdits fruits et/ou morceaux.

6. Procédé selon la revendication 1, dans lequel lesdits fruits sont choisis dans un groupe comprenant les framboises, les fraises, les mûres et les cerises.

7. Procédé selon la revendication 1, dans lequel on ajuste le pH des fruits à une valeur comprise entre plus de 5 et 6,5 en réalisant le mélange en présence d'un sel alcalin.

8. Procédé selon la revendication 7, dans lequel on acidifie à pH 3-5 le mélange avant le séchage.

9. Appareil pour la mise en oeuvre du procédé selon les revendications 1-8, comprenant, montés en série, au moins 2 dispositifs d'injection (1) de vapeur comprenant chacun une tuyère d'injection de produit (11) et une tuyère d'éjection de produit (12) présentant chacune une section intérieure d'abord convergente puis divergente placées à la suite l'une de l'autre dans le tube droit (10) d'un corps en forme de T, **caractérisé par le fait qu'**une extrémité aval (17) de ladite tuyère d'injection présente une surface intérieure conique s'évasant vers l'aval, une extrémité amont (18) de ladite tuyère d'éjection présente une surface extérieure conique convergeant vers l'amont, ladite extrémité amont de la tuyère d'éjection pénètre dans l'extrémité aval de la tuyère d'injection, et les deux extrémités délimitent entre elles un passage conique d'injection de vapeur (19) convergeant et débouchant par un orifice de sortie annulaire dans la tuyère d'injection de produit et présentant un orifice d'entrée annulaire adjacent à un bras tubulaire (13) dudit corps en forme de T.

## Patentansprüche

1. Verfahren zur Herstellung von hydrolysierten Cerealien mit Früchten oder Honig, bei dem
- man eine Mischung aus Getreidemehl, ganzen Früchten oder Fruchtstücken und alpha-Amylase oder eine Mischung aus Getreidemehl, Honig, Wasser und alpha-Amylase herstellt,
- diese Mischung in mehreren aufeinanderfolgenden Schritten in mehreren aufeinanderfolgenden Behandlungszonen durch Dampfeinspritzung behandelt, wobei der Dampf in Form eines die Mischung umhüllenden ringförmigen Strahls in einer ersten Zone im Gegenstrom oder in Strömungsrichtung der Mischung und in den darauffolgenden Zonen im Gegenstrom eingespritzt wird und die Dampfmenge von Schritt zu Schritt abnimmt,
- und diese Mischung trocknet.

2. Verfahren nach Anspruch 1, bei dem man eine Mischung herstellt, die einen Wassergehalt von 40-80% aufweist.

3. Verfahren nach Anspruch 1, bei dem man eine Mischung herstellt, die 0,05-0,2 g alpha-Amylase pro 100 g Getreidemehl-Trockenmasse enthält.

4. Verfahren nach Anspruch 1, bei dem die Menge des eingespritzten Dampfs von Schritt zu Schritt von einer Temperatur von 80-100°C an bis zu einer Temperatur von 120-150°C abnimmt.

5. Verfahren nach Anspruch 1, bei dem die Mischung die aufeinanderfolgenden Behandlungszonen in Form eines zylindrischen Stroms durchquert, dessen Durchmesser größer als die Abmessung der Früchte und/oder Fruchtstücke ist.

6. Verfahren nach Anspruch 1, bei dem die Früchte aus einer Gruppe ausgewählt werden, die aus Himbeeren, Erdbeeren, Brombeeren und Kirschen bestehen.

7. Verfahren nach Anspruch 1, bei dem man den pH-Wert der Früchte auf einen Wert zwischen mehr als 5 und 6,5 einstellt, indem man die Mischung in Gegenwart eines Alkalisalzes herstellt.

8. Verfahren nach Anspruch 7, bei dem man die Mischung vor der Trocknung auf pH 3-5 ansäuert.

9. Vorrichtung zur Durchführung des Verfahrens nach den Ansprüchen 1 bis 8 mit mindestens zwei in Reihe geschalteten Dampfeinspritzvorrichtungen (1), die jeweils eine Produkteinspritzdüse (11) und eine Produktausstoßdüse (12) aufweisen, die jeweils einen zunächst konvergierenden und dann divergierenden Innenquerschnitt besitzen und in dem geraden Rohr (10) eines T-förmigen Körpers hintereinander angeordnet sind, **dadurch gekennzeichnet, dass** ein stromab gelegenes Ende (17) der Einspritzdüse eine sich stromabwärts ausweitende konische Innenfläche aufweist, ein stromauf gelegenes Ende (18) der Ausstoßdüse eine stromaufwärts konvergierende konische Außenfläche aufweist, dieses stromauf gelegene Ende der Ausstoßdüse in das stromab gelegene Ende der Einspritzdüse eintritt und die beiden Enden miteinander einen konvergierenden konischen Dampfeinspritzdurchgang (19) abgrenzen, der über eine ringförmige Austrittsöffnung in die Produkteinspritzdüse ausmündet und eine an einen rohrförmigen Zweig (13) des T-förmigen Körpers anschließende ringförmige Eintrittsöffnung aufweist.

## Claims

1. Method for preparing hydrolysed cereals containing fruit or honey, wherein:
- a mixture is prepared comprising a cereal flour, whole fruit or pieces of fruit and alpha-amylase, or a mixture comprising a cereal flour, honey, water and an alpha-amylase,
- the said mixture is treated by injecting steam in several successive steps in several successive treatment zones, steam being injected in the form of an annular jet enveloping the mixture, counter-current to or in the direction of flow of the mixture in a first zone and counter-current in the following zones, the quantity of steam decreasing from step to step,
- the said mixture is dried.

2. Method according to claim 1, wherein a mixture is prepared having a water content of 40-80%.

3. Method according to claim 1, wherein a mixture is prepared containing 0.05-0.2 g of alpha-amylase per 100 g of dry cereal flour matter.

4. Method according to claim 1, wherein the quantity of steam injected decreases from step to step, from a temperature of 80-100°C to a temperature of 120-150°C.

5. Method according to claim 1, wherein the mixture passes through successive treatment zones in the form of a cylindrical flow with a diameter greater than the size of the said fruits and/or pieces.

6. Method according to claim 1, wherein the said fruits are chosen from a group comprising raspberries, strawberries, mulberries or cherries.

7. Method according to claim 1, wherein the pH of the fruits is adjusted to a value of between 5 and 6.5 while preparing the mixture in the presence of an alkali metal salt.

8. Method according to claim 7, wherein the mixture is acidified to pH 3-5 before drying.

9. Apparatus for implementing the method according to claims 1-8, comprising, mounted in series, at least two steam injection devices (1), each comprising a product injection nozzle (11) and a product ejection nozzle (12) each having an internal section which is at first convergent and then divergent placed one after the other in the straight tube (10) of a T-shaped body, **characterized in that** a downstream end (17) of the said injection nozzle has a conical inner surface widening out downstream, an upstream end (18) of the said ejection nozzle has a conical outer surface converging upstream, the said upstream end of the ejection nozzle penetrates the downstream end of the injection nozzle, and the two ends delimit between them a conical convergent steam injection passage (19) emerging through an annular outlet orifice in the product injection nozzle and having an annular inlet orifice adjacent to a tubular arm (13) of the said T-shaped body.
